# EUROPEAN PATENT APPLICATION

(11) **EP 1 870 212 A1**
(43) Date of publication of application: **26.12.2007**
(21) Application number: 06012898.0
(22) Date of filing: 22.06.2006
(51) Int. Cl.: B25J 13/00

(54) **Robot having a head with artificial ears**

(71) Applicant: Honda Research Institute Europe GmbH, 63073 Offenbach/Main (DE)
(72) Inventor: Joublin, Frank Dr., 63533 Mainhausen (DE)
(74) Representative: Rupp, Christian

(57) **Abstract**

An artificial ear for a robot comprises:
- an auricle-shaped structure (3),
- a microphone (6) which is exposed to a concha region (4) of the auricle-shaped structure (3),
wherein the lower and/or the rear edge of the auricle-shaped structure (3) presents acoustical shielding means (7,8) for shadowing noise from any noise source located below and/or behind the concha region (4).

## Description

### Background:

The present invention relates to the field of robots with artificial acoustical sensing systems, which will be called "artificial ears" in the following. An artificial ear comprises at least a microphone and a sound-guiding element, which will be called an artificial auricle in the framework of the present description and the enclosed claims.

The invention is directed on artificial ears adapted for use with a robot head. The robot head can e.g. be part of a humanoid robot which is characterised in that it generally has the set-up of a human body comprising a body, legs, arms and a head. The artificial ears according to the present invention are particularly designed to be attached to or integrated in the head of the robot.

The invention therefore can not be compared with dummy heads having a binaural stereo microphone, where the target is to build a dummy head and the binaural stereo microphone as close as possible as a replica of the human head and ears. Such dummy heads can be used e.g. for dummy head recording by using an artificial model of a human head, built to emulate the sound-transmitting characteristics of a real human head, with two microphone inserts embedded at "eardrum" locations.

### Object of the invention:

It is the object of the present invention to propose an artificial ear which is particularly adapted for use with a robot head.

### Short description of the solution of the object:

This object is achieved by means of the features of the independent claims.

The dependent claims develop further the central idea of the present invention.

Therefore, according to a first aspect of the present invention an artificial ear for use of with a robot head is proposed. The artificial ear comprises an auricle-shaped structure and a microphone which is exposed to a concha region of the auricle-shaped structure. The concha region is a hollow which is defined in the auricle-shaped structure, which opens to the outside and which connects the microphone to the outside, the microphone being placed in the bottom of the concha region.

According to the invention the lower and/or the rear edge of the auricle-shaped structure presents acoustical shielding means for shadowing noise originating from noise sources located below and/or behind the hollow concha region. These shielding means can e.g. present the shape of a folded over outside edge of the auricle-shaped structure.

Preferably the acoustical shielding means are designed for a shielding/shadowing effect of at least 20dB when comparing the acoustical signals detected by the microphone in the ear with and without the acoustical shielding means, respectively.

The microphone is functionally connected to a pre-amplifying circuitry which can be arranged rearward of the auricle-shaped structure.

The pre-amplifying circuitry can be housed in a casing which is formed as an integrated rearward extension of the auricle-shaped structure.

In a side view, the artificial ear can present an essentially circular shape which makes it completely different to human ear replicas used in connection with dummy heads.

In the side view, the artificial ear can present an acoustically transparent cover at least at the upper front region. The acoustical transparent cover can be removable.

At least the lower rear edge region of the auricle-shaped structure can be covered by an acoustically shadowing cover which is preferably an integrated part of the auricle-shaped structure and which can be an integrated extension of an folded over edge of the auricle-shaped structure.

A further aspect of the present invention relates to artificial ears for use with the humanoid robots, wherein a side view an auricle-shaped structure is divided in an acoustically transparent cover and acoustically shadowing cover. The separation line between said two covers has preferably the shape of a "S" or an inverted "S". It has been found that this arrangement provides a good shadowing effect against typical noise sources (fan etc.) of robots, particularly humanoid robots, as well as an enhancement of front signal sources.

A still further aspect of the present invention relates to artificial ears for use with the robot heads in which said separation line is composed of a convex segment directly connected with a concave segment.

A still further aspect of the present invention relates to a robot head being provided with binaural artificial ears, i.e. one artificial ear at each of the two lateral faces of the robot head.

The two ears can be mechanically connected by the earphone-like bending element, which is particularly preferred when the artificial ears are made removable from the robot head.

The robot head can present at least one camera at its front face.

The invention also relates to humanoid robots equipped with such artificial ears and/or robot heads.

The robot can be provided with a fan for cooling electrical circuitry, the fan being arranged under and/or behind the artificial ear(s).

The fan can be integrated in a back pack of the robot.

### Short description of the figures of the enclosed

### drawings:

Further advantages, features and objects of the present invention will become evident for the skilled person when going through the enclosed detailed description of preferred embodiments taken in conjunction with the figures of the enclosed drawings.
- Figure 1 shows a perspective view of an artificial ear according to the present invention.
- Figure 2 shows a side view of an artificial ear with acoustically transparent cover,
- Figure 3 shows a humanoid robot in connection with which the present invention can be used, and
- Figure 4 shows a robot head according to the present invention.

### Detailed description of preferred embodiments:

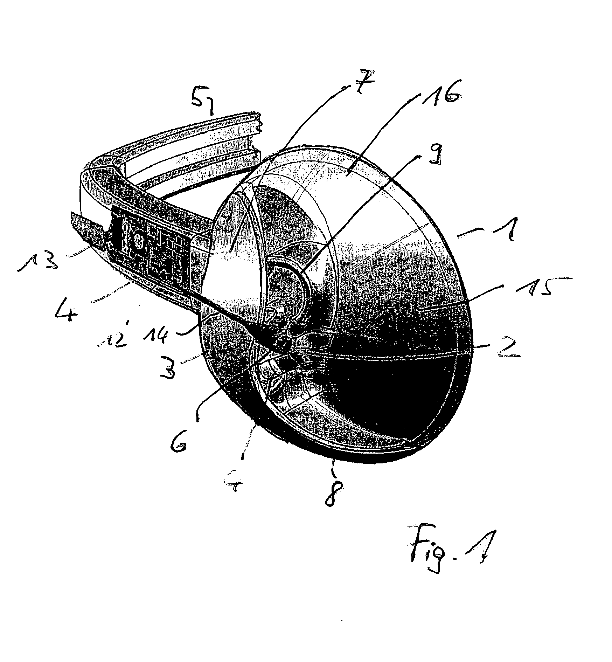

In figure 1 the reference sign 1 generally designates an artificial ear according to the present invention.

As it is already visible from figure 1, it is not the aim of the present invention to make a replica of the human ear, but to make an artificial ear adapted for use with robots and particularly with robots having a head.

The artificial ear 1 according to the present invention has a preferably circular ground base plate 2. An auricle-shaped structure 3 extends to the outside of the base plate 2. At the rear end of the auricle-shaped member 3 and extension 4 is integrated which can house, e.g. an electrical circuitry 12, such as for example pre-amplifying means. The electrical circuitry 12 is provided with an interface 13 in order to forward the preprocessed electrical signals e.g. to a computing unit of a robot. The computing unit can then e.g. determine targets of motion of the robot based on the processed signals, e.g. by carrying out a localisation estimation of sound sources in order to have the head of the robot focus on or move to the estimated position of the sound source.

This longitudinal extension 4 can be extended (see 5) in order to represent an elastic and bendable mechanical connection member (which can also be used for electronic and electrical connection) to a second artificial ear arranged symmetrically to the artificial ear 1 shown in figure 1.

The auricle-shaped structure 3 of the artificial ear 1 defines a hollow concha region 4, in the acoustical centre of which a microphone 6 is placed. The hollow concha region 4 can present the shape of an asymmetrical cone enhancing acoustical signals coming from the front. The asymmetry of the concha and adjacent regions is important to obtain localization cues in the elevation plane.

The microphone 6 is in functional connection 14 with the processing circuitry 12 for signals detected by the microphone 6.

As can be seen from figure 1, the rear end and/or the lower end of the auricle-shaped structure 3 can be provided with acoustical shielding/shadowing means 7, 8. These acoustical shadowing means 7, 8 are designed to shadow noise originating from noise sources at a position to the rear and/or the below the artificial ear 1.

The shielding means 7, 8 can have the shape of a folded over outside edge of the auricle-shaped structure 3.

Preferably the rear shielding means 7 essentially cover the concha region 4 an at least partially overlapping manner in order to shield the artificial ear 1 efficiently against typical noise sources behind the artificial ear 1.

On the other hand, the width of the lower shielding means 8 can be made much smaller than the width of the rear shielding means 7 such that the overlap from the lower shielding means 8 with the base plate 2 is much smaller than the corresponding overlap of the rear shielding means 7 with the base plate 2.

Preferably the upper region 16 and/or the front region 15 of the artificial ear is (acoustically) completely exposed, i.e. any sound originating from a sound source above and/or in front (i.e. to the right in figure 1) of the artificial ear 1 is allowed to enter the hollow concha region 4 and then the microphone 6.

Inside the concha area 4, inner pinnae elements 9 can be arranged which are designed to break the symmetry between sound signals coming from above the artificial ear 1 and from a position below the artificial ear 1, respectively.

The inner pinnae elements 9 are designed to enhance 3D localization cues and enhance front signals.

The asymmetry introduced by the inner pinnea elements 9 and the amplification of front source signals contributes to a better separation of ILD cues from the front and the back, respectively.

The artificial ear 1, due to the arrangement of the acoustical shielding means 7, 8 is particularly suited for a robot with an inherent noise source, which is part of the robot, such for example a fan, and which is arranged below and/or be rearwards of the artificial ear 1.

Furthermore, due to the arrangement of the acoustical shielding means 7, 8 and the inner pinnae elements 9 this ear is particularly suited for selectively receiving signals from a sound source being in front of the robot equipped with the artificial ear 1 and being slightly higher than the position of the artificial ear 1.

Therefore the shown artificial ear 1 is particularly adapted for use on a robotic head of the robot which has a size smaller than human beings, and wherein the humanoid robot is designed to communicate with human beings.

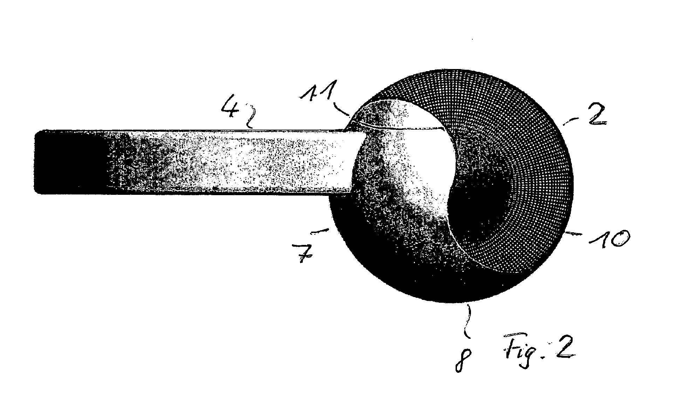

Figure 2 shows a side view of an artificial ear 1 according to the present invention.

The basic contour is defined by the base plate 2 which is symmetrical.

As can be seen from figure 2, the upper and front part of the artificial ear 1 can be covered by an acoustically transparent and optionally replaceable cover 10. The acoustically transparent cover 10 can be made from a porous or grid-like material.

Preferably the division line between the acoustically transparent cover 10 and the acoustical shielding means 7, 8 has the shape of a "S" or an inverted "S".

The division line 11 between these two cover parts 10 and 7, 8, respectively is a combination of a convex and a concave segment.

It has been found out that this separation between the overlapping shielding means 7, 8 (being an extension of the folded over outer edge of the auricle-shaped structure 3) and the acoustically transparent cover 11 is particularly adapted for heads of robots. It is particularly suited for robots having a size equal to or smaller than adult human beings, i.e. 160cm or smaller, and which are designed for a acoustic (voice) communication with human beings.

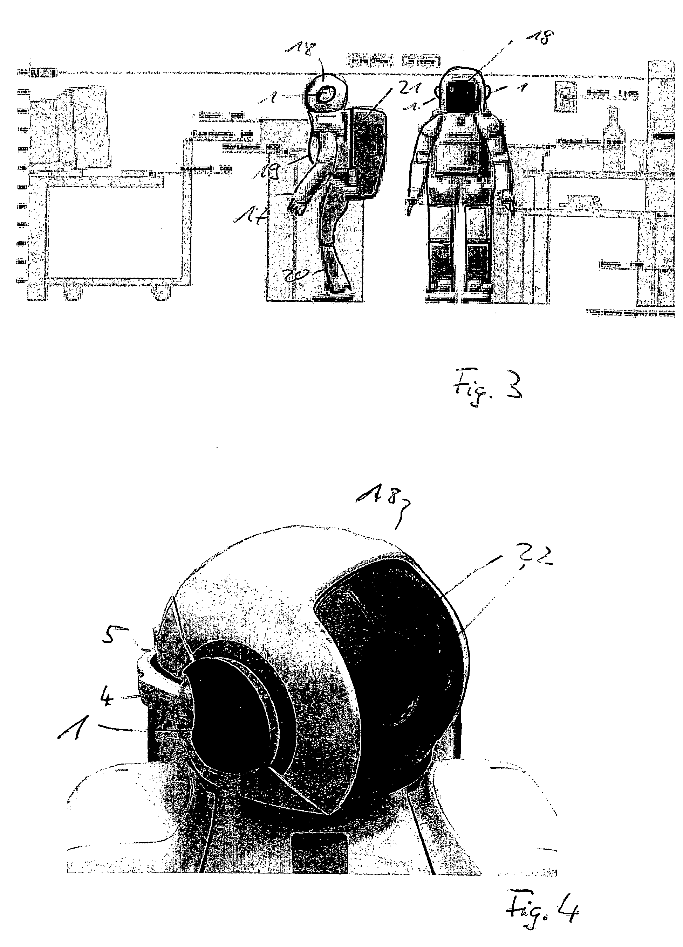

Figure 3 shows an example of such a humanoid robot. The example more particularly shows Honda's ASIMO robot which is a biped humanoid robot with a two arms 17, a head 18 equipped with two cameras at the front (see figure 4 for details), a body 19, two legs 20 and a backpack 21 containing a computing hardware. The backpack can furthermore house a cooling fan which represents a noise source from which the artificial ears 1 arranged at the two lateral faces of the head 18 of the humanoid robot are to be shielded.

Note that the invention can be used in connection with any static or moveable robot head. "Head" generally has to be understood as a structure supporting the artificial ears with a certain distance between them. The term "head" has only be used in order to illustrate a support structure for the artificial ears.

The robot can comprise a head only. The head can optionally be connected to a mobile (walking, rolling, ...) or static support.

Figure 4 shows the head of a robot 18 with the two cameras 22 at its front. The artificial ears 1 are connected to each other by an elastic element 5 and can be removable as a earphone-like unit from the head 18.

Alternatively the auricle-shaped structure 3 of the artificial ears 1 can be an integral part of the head 18.

The arrangement of the artificial ears 1 on a robot head 18 as shown in figure 4 has as a result that the two microphones 6 are then located at some distance of each other, which allows the perception of Interaural Time Differences (ITD) that can serve the localization of the source direction within a. so-called cone of confusion.

The head 18 between the microphones' position is chosen to have a shadow effect on the sound level in order to improve the Interaural Level Differences (ILD).

## Claims

1. An artificial ear for use with a robot, comprising:
- an auricle-shaped structure,
- a microphone which is exposed to a concha region of the auricle-shaped structure,
wherein the lower and/or the rear edge of the auricle-shaped structure presents acoustical shielding means for shadowing noise from any noise source located below and/or behind the concha region.

2. The artificial ear according to claim 1,
wherein the acoustical shielding means are designed for a shielding effect of at least 20dB for frequencies above 2kHz.

3. The artificial ear according to claims 1 or 2,
wherein the microphone is connected to a pre-amplifying circuitry arranged rearwards of the auricle-shaped structure.

4. The artificial ear according to claim 3,
wherein the pre-amplifying circuitry is housed in a casing being an integrated rearward extension of the auricle-shaped structure.

5. The artificial ear according to any of the preceding claims,
wherein in a side view, the ear present an essentially circular shape.

6. The artificial ear according to any of the preceding claims,
which presents an acoustically transparent cover at least at its upper front edge.

7. The artificial ear according to claim 6,
wherein the acoustically transparent cover is removable.

8. The artificial ear according to claim 6 or 7,
wherein at least the lower rear edge region of the auricle-shaped structure is covered by an acoustically shadowing cover.

9. The artificial ear according to any of the preceding claims,
wherein close to the microphone inner pinnae elements are arranged, which are designed to break the acoustical symmetry between sound sources located above and below, respectively, of the artificial ear.

10. The artificial ear according to any of the preceding claims,
wherein the shielding means present are formed by a folded over outside edge of the auricle-shaped structure.

11. An artificial ear, comprising:
- an auricle-shaped structure,
- a microphone which is exposed to a concha region of the auricle-shaped structure,
wherein in a side view the auricle-shaped structure is divided in a acoustically transparent cover and an acoustically shadowing cover,
wherein the separation line between said two covers has the shape of an "S" or an inverted "S".

12. An artificial ear, comprising:
- an auricle-shaped structure,
- a microphone which is exposed to a concha region of the auricle-shaped structure,
wherein in a side view the auricle-shaped structure is divided in a acoustically transparent cover and an acoustically shadowing cover,
wherein the separation line is composed of a convex portion directly connected with a concave portion.

13. A robot head, being provided with binaural artificial ears.

14. A robot head, being provided at each of its lateral faces with respectively one artificial ear according to any of the preceding claims.

15. The robot head according to claim 14,
wherein the two ears are mechanical connected by a earphone-like bending element.

16. The robot head according to claim 14 or 15, having at least one camera at its front face.

17. A robot, being provided with at least one artificial ear according to any of claims 1 to 12 or with a head according to claims 13 to 16.

18. The robot according to claim 17, being provided with a fan for cooling electrical circuitry, the fan being arranged under and/or behind the artificial ear(s).

19. The robot according to claim 18,
wherein the fan is integrated in a computing back pack of the robot.
